# EUROPEAN PATENT APPLICATION

(11) **EP 3 040 725 A1**
(43) Date of publication of application: **06.07.2016**
(21) Application number: 15167084.1
(22) Date of filing: 11.05.2015
(51) Int. Cl.: G01N 35/00

(54) **BIOLOGICAL DISC AND METHOD OF POSITIONING THE BIOLOGICAL DISC**

(30) Priority: 29.12.2014 CN 201410834068
(71) Applicant: Quanta Storage Inc., Taoyuan County 333 (TW)
(72) Inventor: Huang, Hsin-Lung, 333 Taoyuan City (TW); Chen, Ming-Hung, 333 Taoyuan City (TW); Feng, Chuan-Tsung, 333 Taoyuan City (TW)
(74) Representative: Becker Kurig Straus

(57) **Abstract**

A biological disc and method of positioning the biological disc is presented. The biological disc includes a manufacturing information data zone on the outermost peripheral for storing data corresponding to characteristics and limitations of the biological disc, a plurality of flow paths, and a biological detecting zone on the outer peripheral. The testing start mark is used to mark a starting point for counting testing chambers. Dividers are disposed between a plurality of testing marks, upper positioning mark, and lower positioning mark. The testing chamber is displayed in the testing marks. The lower positioning mark is positioned across the lower half of the testing marks and the upper positioning mark is positioned across the upper half of the testing marks used for positioning the testing mark.

## Description

### Field of the Invention

The present invention relates to a biological disc, and more particularly, a biological disc comprising marks corresponding to manufacturing data and testing chambers and a method of positioning the manufacturing data and the testing chambers for reading convenience.

### Background of the Invention

As medical technology improves, a number of high speed biological testing technologies are produced. The use of optical technology in analyzing biological particles of different types of biological samples stored in testing chambers of a biological disc and analyzing the biological samples automatically are becoming a primary biological testing technology.

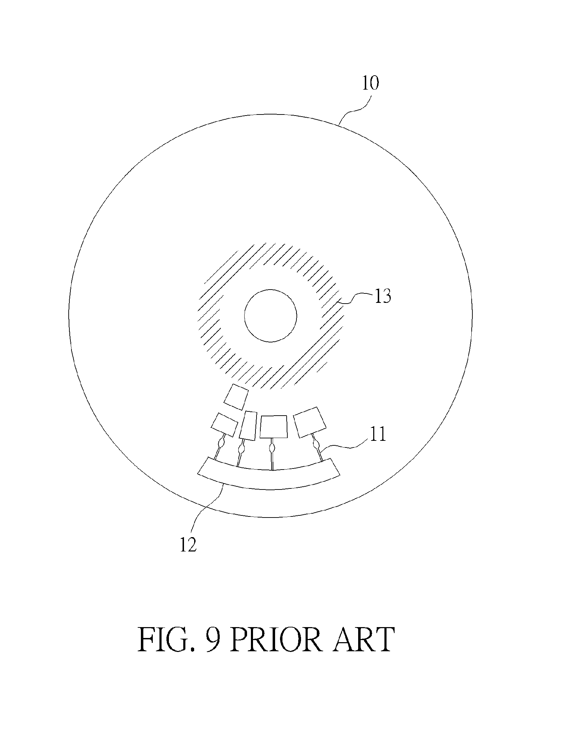

FIG.9 illustrates a structure of a biological disc according to prior art. More specifically, an example prior art is U.S. Patent No. 6,806,088. The biological disc 10 comprises a plurality of flow paths 11 used to store biological samples such as blood and reagents such as substrates or magnetic beads. When the biological disc 10 rotates, the centrifugal force generated is used to drive the biological sample and reagents to a testing chamber of a biological detecting zone 12 of the biological disc 10 and perform mixing. An optical pick-up not shown in FIG.9 is disposed across the biological detecting zone 12. The optical pick-up projects a light ray onto the testing chamber of the biological detecting zone 12. The optical pick-up receives a flux of a reflection of the light ray going through the testing chamber. The analysis of the biological sample is dependent on the amount of flux of the reflection.

The materials, layers and thickness of the biological disc 10 will affect the strength of the signal detected by the optical pick-up, the efficiency of the light ray projected by the optical pick-up, and contribute to damages of the biological disc. Thus, the accuracy of the analysis is affected. Furthermore, a manufacturing information data zone (MID zone) 13 is disposed in the inner peripheral of the biological disc 10 for different manufacturers to record limitations and characteristic of the biological disc for reference.

The optical pick-up is moved through the radius of the biological disc 10 of the prior art to the manufacturing information data zone 13 to read the manufacturing data from the manufacturing information data zone 13 and calibrate the optical pick-up accordingly. The optical pick-up is then moved through the radius of the biological disc 10 of the prior art to the biological detecting zone 12. The light ray is projected to the testing chamber to perform analysis of the biological sample. However, the sequence of the plurality of data units on the manufacturing information data zone 13 and the testing chambers on the biological detecting zone 12 are not distinguishable. To be able to identify the sequence, the biological disc 10 of the prior art needs to have corresponding bar codes placed at the same angle as the plurality of data units and testing chambers to record the position of the plurality of data units and testing chambers to establish sequence.

The prior art requires an additional barcode reader which increases the manufacturing cost and also complicate the system for the biological disc. Furthermore, since the biological disc 10 is made of polymer, the biological disc 10 is easily misshaped and the plurality of data units on the manufacturing information data zone 13 and the testing chambers on the biological detecting zone 12 is displaced. Since the optical pick-up has a fixed position corresponding to the radius of the biological disc 10, the optical pick-up is not able to do real time positioning to generate an accurate flux measurement of the reflection. Thus, an error in the analysis occurs. Therefore, there is a need to improve the method of positioning the biological disc.

### Summary of the Invention

An objective of the present invention is to provide a biological disc including a manufacturing information data zone having a data start mark and a biological detecting zone having a testing start mark to determine an order of data units and testing chambers.

Another objective of the present invention is to provide a method of positioning a biological disc using a lower positioning mark and an upper positioning mark corresponding to a testing chamber. The difference between a positioning signal of the lower positioning mark and a positioning signal of the upper positioning mark is used to calibrate alignment of an optical pick-up and perform testing chamber positioning to increase the accuracy of the detection.

To achieve the objective, the biological disc comprises a manufacturing information data zone disposed on an outermost peripheral of the biological disc having a data start mark used to determine a starting point of a data mark, the data mark includes a plurality of data units having a predetermined length used to record data corresponding to the biological disc; a plurality of flow paths separately disposed on the biological disc and used for storing biological samples and reagents; entrances to the plurality of flow paths are set on an inner peripheral of the biological disc and exits of the plurality of flow paths are set on an outer peripheral of the biological disc; and a biological detecting zone having a predetermined width is disposed on the outer peripheral of the biological disc. The biological detecting zone includes a testing start mark having a predetermined length used to indicate a starting point of a counting of testing chambers and a separately disposed plurality of testing marks, a lower positioning mark, and a higher positioning mark. A testing mark is used to display a testing chamber; a lower positioning mark and an upper positioning mark have a width 0.5 times a width of the testing mark. The lower positioning mark is positioned across the lower half of the testing mark. And, the upper positioning mark is positioned across the upper half of the testing mark.

The plurality of data units of the biological disc are transparent and have the same predetermined width. The data start mark comprises non-transparent 3 short marks, 1 long mark, and 3 short marks and transparent dividers between the non-transparent marks. The short marks have a predetermined length 0.5 times the length of the data unit. The long mark has a predetermined length 1.5 times the length of the data unit. The dividers have a predetermined length 0.5 times the length of the data unit.

The biological detecting zone of the biological disc has a non-transparent shade surrounding the testing start mark, the testing mark, the upper positioning mark, and lower positioning mark. The testing start mark, the testing mark, the upper positioning mark, and are transparent. The data start mark is a square. The dividers of the testing start mark, the testing mark, and the lower positioning mark have a length 0.5 times the length of the testing start mark. A divider is disposed between the testing start mark and the testing mark. Another divider is disposed between the testing mark and the lower positioning mark. The upper positioning mark is disposed next to the lower positioning mark. The testing mark is a circle having a diameter 0.5 times a length of the testing start mark. The upper positioning mark and lower positioning mark are rectangles having a length 0.25 times the length of the testing start mark.

An embodiment of a method of positioning a biological disc, comprises moving an optical pick-up to a manufacturing information data zone disposed on an outermost peripheral of the biological disc, moving the optical pick-up within an area of the manufacturing information data zone, using a data start mark as a starting point, reading data from the manufacturing information data zone for a number of turns, selecting a clear information data to decode for calibrating a position of the optical pick-up, moving the optical pick-up to a biological detecting zone, reading positioning signals of the lower positioning mark and the upper positioning mark for the number of turns, calibrating the position of the optical pick-up until the difference between positioning signals of the lower positioning mark and the upper positioning mark is less than a predetermined value, reading the testing start mark to indicate a starting point of a counting of testing chambers, and performing analysis according to testing signals from the testing marks.

### Brief Description of the Drawings

In the following, the invention is further illustrated by way of example, taking reference to the accompanying drawings. Thereof
FIG.1 is an illustration of a diagram of a biological disc testing system according to an embodiment of the present invention;
FIG.2 is an illustration of a diagram of a manufacturing information data zone according to an embodiment of the present invention;
FIG.3 is an illustration of a structure of a biological detecting zone according to an embodiment of the present invention;
FIG.4 is an illustration of a diagram of the positioning of the manufacturing information data zone on the biological disc in FIG.1;
Fig.5 is an illustration of a signal corresponding to the manufacturing information data zone in FIG.2;
FIG.6 is an illustration of a diagram of a positioning of a biological detecting zone on the biological disc in FIG.1;
FIG.7 is an illustration of a signal corresponding to the biological detecting zone in FIG.3;
FIG.8 is an illustration of a flowchart of a method of positioning a biological disc; and
FIG.9 is an illustration of a structure of a biological disc according to prior art.

### Detailed Description

To achieve the objective of the present invention, preferred embodiments of the present invention are described in the following paragraphs together with some illustrations.

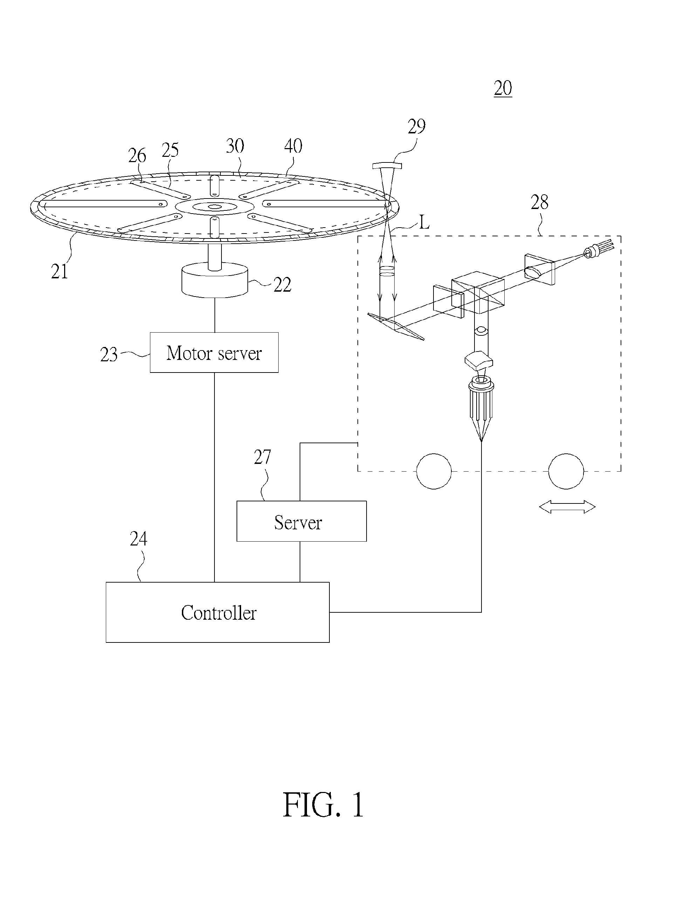

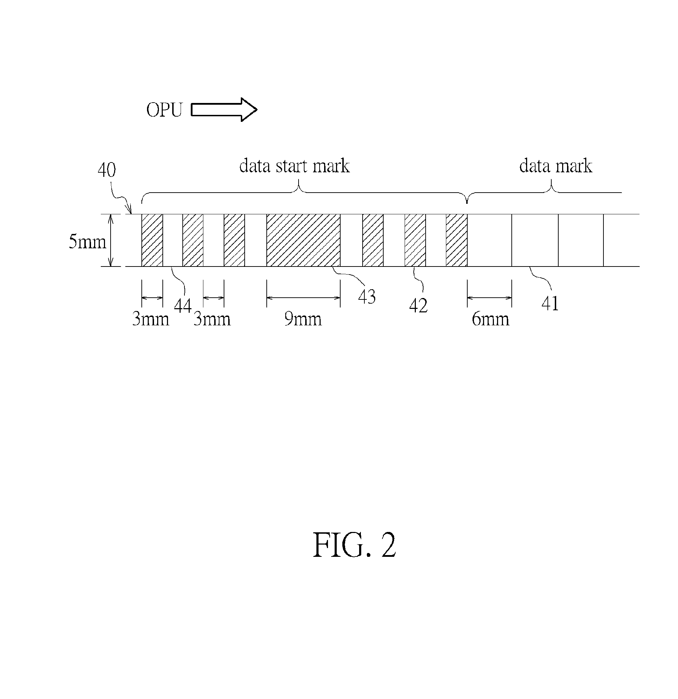

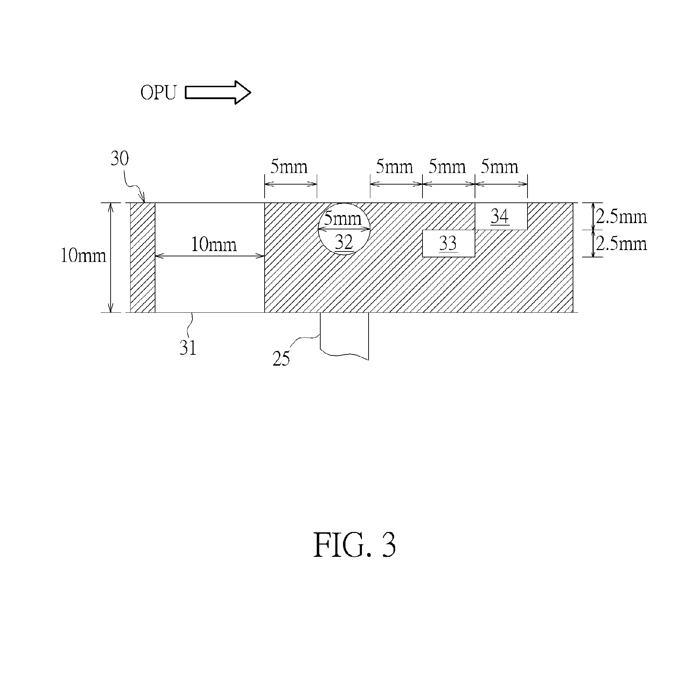

FIG.1 illustrates a diagram of a biological disc testing system according to an embodiment of the present invention. FIG.2 illustrates a diagram of a manufacturing information data zone according to an embodiment of the present invention. FIG.3 illustrates a structure of a biological detecting zone 30 according to an embodiment of the present invention. The biological disc testing system 20 comprises a biological disc 21 disposed on a shaft of a motor 22. A motor server 23 may receive commands from a controller 23 to control the motor 22 to rotate the biological disc 21. The biological disc 21 may have a plurality of flow paths 25 used to store biological samples and reagents. The entrance to the flow paths may be disposed on the inner peripheral of the biological disc 21. At the end of each flow path 25 may be a testing chamber 26. The testing chamber 26 may be disposed on the biological detecting zone 30. The biological detecting zone 30 may be disposed on an outer peripheral of the biological disc 21 while the manufacturing information data zone 40 may be disposed on a further outer peripheral of the biological disc 21. The inner peripheral is the peripheral of the biological disc close to the center of the biological disc. The outer peripherals are peripherals of the biological disc further away from the center of the biological disc. The further outer peripheral is closer to the outer edge of the biological disc 21 as compared to the outer peripheral.

The controller 24 of the biological disc testing system 20 may further transmit commands to the sensor server 21 to control an optical pick-up 28. The biological disc 21 may rotate and a light ray L may be projected onto the biological detecting zone 30 or the manufacturing information data zone 40 of the biological disc 21. When the light ray L passes through the biological disc and to a reflector 29, a reflection may be returned to the optical pick-up 28. The reflection received by the optical pick-up 28 may be transmitted to the controller 24. A testing analysis may be performed according to the amount of the flux corresponding to the reflection received. The optical pick-up 28 may be moved along a radius of the biological disc.

The manufacturing information data zone 40 shown in FIG.2 may be disposed on the further outer peripheral of the biological disc 21. The manufacturing information data zone 40 may have a width of 5 millimeter (mm). The manufacturing information data zone 40 may comprise two parts. The first part may be a data start mark to mark the start of a data mark and the second part may be the data mark. The data mark may comprise a plurality of data units 41. The plurality of data units 41 may have 41 bits to record data of characteristics and limitations from the biological disc 21. Each of the data units 41 may be transparent and may have a length of 6mm. The data start mark of the manufacturing information data zone 40 may comprise 3 short marks 42, 1 long mark 43, and 3 short marks 42. Each of the short marks 42 and the long mark 43 may not be transparent and may be separated by a divider 44. The divider 44 may be transparent. The short mark 42 may have a length of 3mm and may be 0.5 times longer that a data unit 41. The long mark 43 may have a length of 9mm and may be 1.5 times longer than a data unit 41. The divider 44 may have a length of 3mm and may be 0.5 times longer that a data unit 41.

The biological detecting zone 30 shown in FIG.3 may be disposed on the outer peripheral of the biological disc 21. The biological detecting zone 30 may have a testing start mark 31 used to determine a starting point for the calculation of the number of the testing chambers 26. And each of the plurality of testing chambers 26 may individually have a corresponding testing mark 32, a lower positioning mark 33 and an upper positioning mark 34. The testing chamber 26 may be displayed within a testing mark 32. The lower positioning mark 33 and the upper position mark 34 may each be set to have a width 0.5 times the width of the testing mark 32. The upper positioning mark 34 may be disposed across the upper half of the testing mark 32. The upper half of the testing mark 32 is the part of the testing mark closest to the manufacturing information data zone 40 of the biological disc 21. The lower positioning mark 33 may be disposed across the lower half of the testing mark 32.

The biological detecting zone 30 may have a width of 30mm. The length of the testing start mark 31 may be 10mm to form a square shape to indicate the starting position of the testing chamber 26. The divider disposed before the testing mark 32 may have a length of 5mm and may be 0.5 times the length of the testing start mark 31. The testing start mark 32 of the biological detecting zone 30 may be a circle. The diameter of the circle may be 5mm and may be 0.5 times the length of the testing start mark 31. The testing chamber 26 corresponding to the flow path 25 may be displayed in the transparent testing mark 32. The testing chamber 26 shown in FIG.3 may be a first testing chamber 26. The position of the testing mark 32 on the biological detecting zone 30 may be determined according to the length of the flow path 25 needed. The testing mark 32 may be disposed near the manufacturing information data zone 40 to easily move the optical pick-up 28 to perform testing.

The divider disposed after the testing mark 32 may have a length of 5mm and may be 0.5 times the length of the testing start mark 31. The lower positioning mark 33 may be a rectangle having a length of 5mm and a width of 2.5mm. The lower positioning mark 33 may be disposed across the lower half of the testing mark 32. An upper positioning mark 34 having a length of 5mm and a width of 2.5mm may be disposed next to the lower positioning mark 33. The upper positioning mark 34 may be disposed across the upper half of the testing mark 32. The upper half of the testing mark 32 is the part of the testing mark closest to the manufacturing information data zone 40 of the biological disc 21. And, according to the other data flows 25, a testing mark 32, a lower positioning mark 33 and an upper positioning mark 34 corresponding to a second, third, fourth, etc. testing chambers 26 may be positioned. Although exact measurements are described for the above embodiment, the present invention is not limited to having the following measurements. The above described embodiments only represent an example of the present invention.

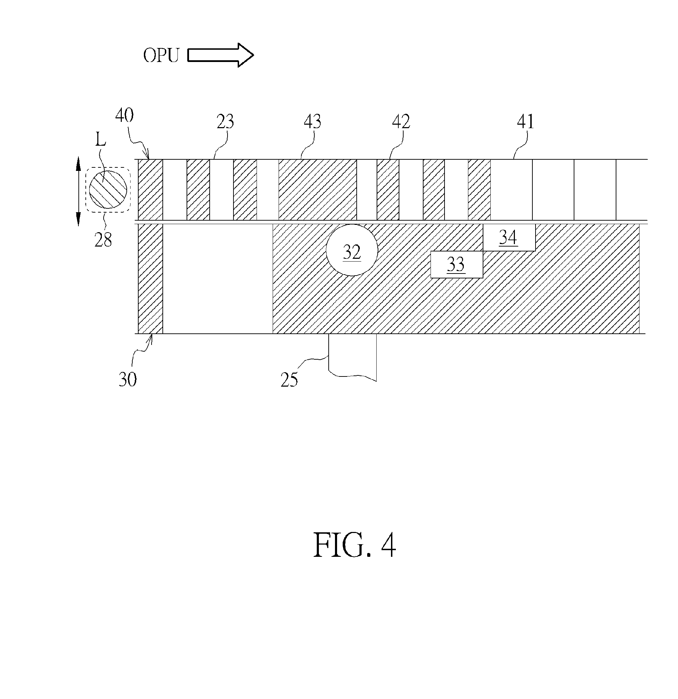

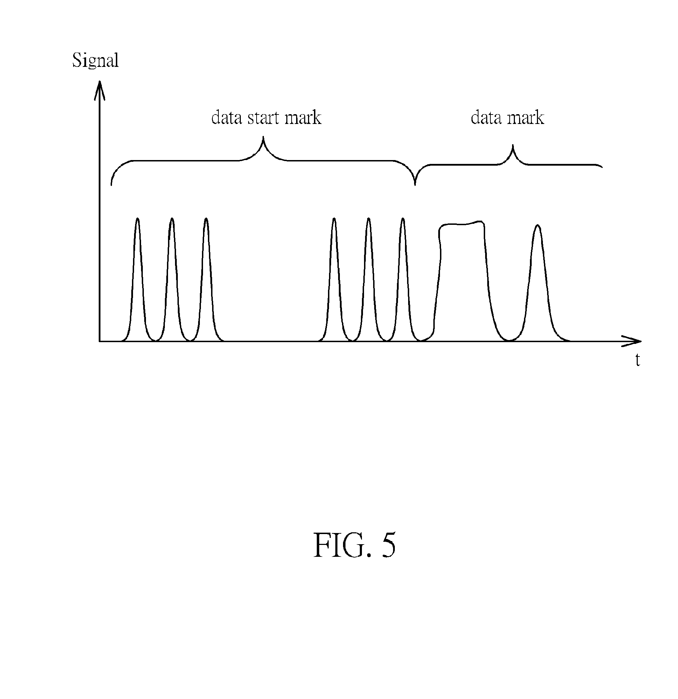

FIG.4 illustrates a diagram of the positioning of the manufacturing information data zone on the biological disc in FIG.1. Fig.5 illustrates a signal corresponding to the manufacturing information data zone in FIG.2. When the biological disc is performing biological detection, the biological samples and reagents may be stored inside the flow path 25. The biological disc may rotate at a high speed. And, the biological samples and reagents may be moved to the outer peripheral of the biological disc using the centrifugal force and perform mixing. The testing chamber may be displayed through the testing mark 32. The rotational speed of the biological disc may be reduced to position the optical pick-up to the furthest outer peripheral of the biological disc. The light ray L may be projected to the manufacturing information data zone 40. The signal of the manufacturing information data zone 40 may be able to read 5mm of the width of the manufacturing information data zone 40. When the light ray L is projected on the short marks 42 and the long mark 43 of the manufacturing information data zone 40, the light ray may not pass through since the short marks are not transparent. The optical pick-up 28 may not be able to receive an amount corresponding to the flux of the reflection. Thus, the signal strength read may be zero. On the other hand, when the light ray L is projected on the divider 44 of the data start mark, the light ray may pass through since the divider 44 is transparent. The optical pick-up 28 may be able to receive an amount corresponding to the flux of the reflection. The received signal corresponding to the dividers 44 may be fixed. Thus, as shown in FIG.5, the signals indicating the data start mark may comprise three short signals corresponding to the dividers, followed by a long zero signal corresponding to the long mark 43, and another three short signals corresponding to another set of dividers. When the optical pick-up 38 has read the data start mark, the system may be able to determine the starting point of the manufacturing information data zone 40 or determine that the optical pick-up has already rotated through the whole biological disc at least one time.

After reading the data start mark, the data mark may be read. The data units 41 of the data mark may be transparent, but may have long and/or short data markers. When the light ray L is projected to the data unit 41, because the data unit 41 is partially transparent, the light ray L may pass through and reflect. Thus, the optical pick-up may be able to receive an amount of flux of reflection. FIG.5 shows the different data signals from the data mark. The optical pick-up may be used to read the different data signals. The data signals may be decoded to form the data from the biological disc for calibrating the optical pick-up 28. To be able to get an accurate data, the optical pick-up 28 may be able to move along 5mm of the width of the manufacturing information data zone 40. The data start mark may be the starting point for reading the data from the manufacturing information data zone 40 for a number of rounds. The clearest data signal read may be decoded to prevent from having erroneous signal due to misshape of the biological disc, etc.

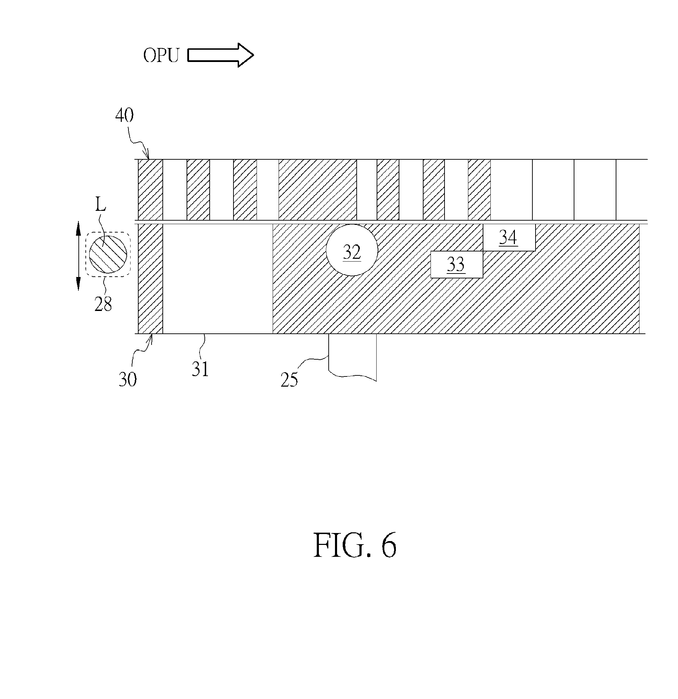

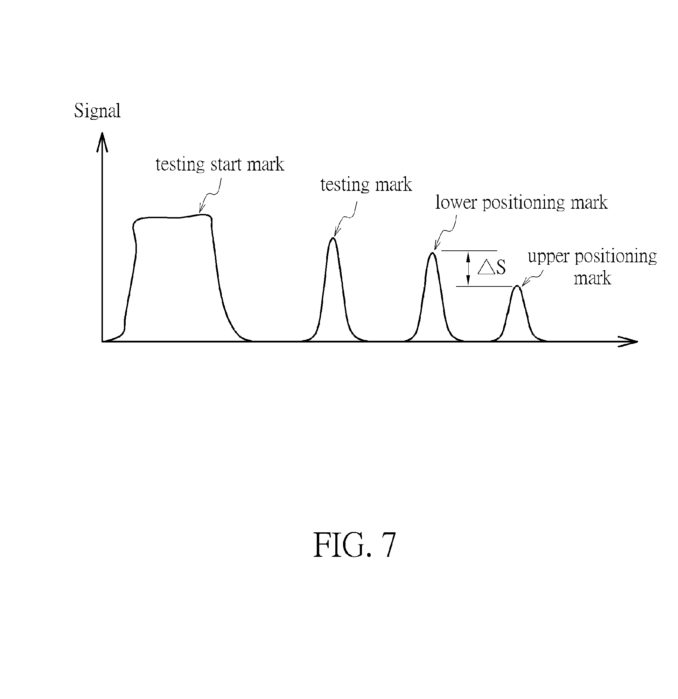

FIG.6 illustrates a diagram of a positioning of a biological detecting zone on the biological disc in FIG.1. FIG.7 illustrates a signal corresponding to the biological detecting zone in FIG.3. In FIG.6, after calibrating the optical pick-up 28, the optical pick-up 28 may move from the manufacturing information data zone 40 to the biological detecting zone 30. The optical pick-up 28 may read the non-transparent part of the biological detecting zone 30. Because the light ray L may not pass through, the optical pick-up may not be able to receive any amount of flux of reflection. Thus, as shown in FIG.7, majority of the signal may be zero. But, when the optical pick-up 28 is reading transparent areas including the testing start mark 31, the testing mark 32, the lower positioning mark 33 and the upper positioning mark 34, a signal may appear.

When the optical pick-up 28 reads the 10mm wide, square shaped testing start mark 31, a longer and stronger signal may be generated and may be taken as the starting point for counting the number of testing chambers. The optical pick-up 28 may follow to read the circle shaped testing mark 32. Because the testing mark 32 may include the testing chamber, the testing chamber may be the first testing chamber. The number of particles in the biological sample that reacted with a reagent in the testing chamber corresponding to the testing mark 32 may affect the transparency of the testing mark 32 and generate different strengths for the detection signal for detection analysis. The optical pick-up 28 may then detect the lower positioning mark 33. Because the lower positioning mark 33 is directly across the lower part of the testing mark 32, when the upper half of the light ray L that has been calibrated to go through the testing mark 32 is covered, the amount of flux of the reflection may be half of the amount of flux of the reflection detected from the test start mark 31. The positioning signal detected may be half of the positioning signal determined according to the test start mark 31. The upper positioning mark 34 may be directly across the upper half of the testing mark 32. The upper half of the testing mark 32 is the part of the testing mark 32 closest to the manufacturing information data zone 40 of the biological disc 21. When the optical pick-up 28 is reading the upper positioning mark 34, the lower half of the light ray L that has been calibrated to go through the testing mark 32 may be covered when the lower half of the light ray L that has been calibrated to go through the testing mark 32 is covered, the positioning signal detected may be half of the positioning signal determined according to the test start mark 31. Thus, the positioning signal of the lower positioning mark 33 and the positioning signal of the upper positioning mark 34 may be the same when the light ray L is accurate. When the light ray L is misaligned with the testing mark 32, the positioning signal corresponding to the lower positioning mark 33 may increase and the positioning signal corresponding to the upper positioning mark 34 may decrease. In another embodiment, when the light ray L misaligns with the testing mark 32, the positioning signal corresponding to the lower positioning mark 33 may decrease and the positioning signal corresponding to the upper positioning mark 34 may increase. The difference between the positioning signal corresponding to the lower positioning mark 33 and the positioning signal corresponding to the upper positioning mark 34 may have a difference ΔS. The optical pick-up 28 may be repositioned until the two positioning signals are approximately the same to be able to accurately project the light ray L onto the testing mark 32.

To accurately read the testing mark 32, when the optical pick-up 28 is moved from the manufacturing information data zone 40 to the biological detecting zone 30, the biological disc may first be rotated for a number of times to have the optical pick-up 28 read the positioning signal of the lower positioning mark 33 and the upper positioning mark 34. The difference ΔS between the positioning signal corresponding to the lower positioning mark 33 and the positioning signal corresponding to the upper positioning mark 34 may be used to calibrate the optical pick-up 28. When the difference ΔS is less than a predetermined value, the light ray L may be accurately positioned to project through the test mark 32. The testing start mark 31 may then be read to start the count of the testing chambers. An analysis may then be performed on the testing signal corresponding to the first, second, third, fourth, etc. testing chambers disposed on the test mark 32.

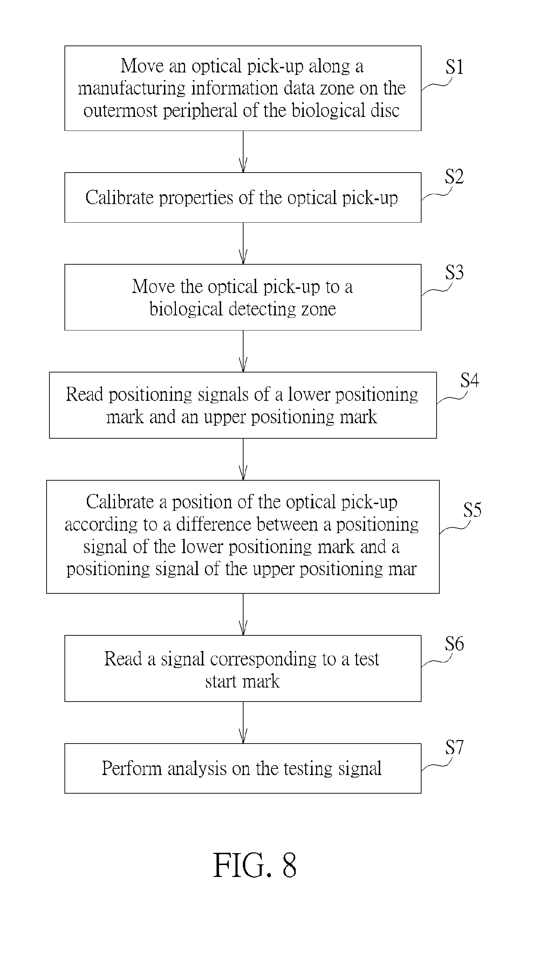

FIG.8 illustrates a flowchart of a method of positioning a biological disc. The method may comprise but is not limited to the following steps:
- Step S1:: move an optical pick-up along a manufacturing information data zone on the outermost peripheral of the biological disc; the data start mark may be the starting point for reading data of the manufacturing information data zone;
- Step S2:: calibrate properties of the optical pick-up according to data read from the manufacturing information data zone;
- Step S3:: move the optical pick-up to a biological detecting zone of the biological disc;
- Step S4:: rotate the biological for a number of times to have the optical pick-up read positioning signals of a lower positioning mark and an upper positioning mark;
- Step S5:: calibrate a position of the optical pick-up according to a difference between a positioning signal of the lower positioning mark and a positioning signal of the upper positioning mark;
- Step S6:: read a signal corresponding to a test start mark to indicate the start of the counting of the testing chambers; and
- Step S7:: perform analysis on the testing signal corresponding to the number of testing chambers disposed on the test mark.

According to the embodiments of the present invention, the biological disc may determine a starting point of the detection according to the data in the manufacturing information data zone. The starting point may also be used as the starting point for counting the testing chambers to determine the sequence of each data unit and testing chamber. Thus, there is no longer a need for the use of additional reader to read barcodes. Furthermore, the method of positioning the biological disc may use the difference between the positioning signal of the lower positioning mark and upper positioning mark disposed near the testing chamber to calibrate the optical pick-up to generate equal positioning signals. Thus, the light ray may be positioned to be directly projected through the testing mark to perform analysis of the testing chamber and increase the accuracy of the detection.

## Claims

1. A biological disc (21) **characterized by** comprising:
a manufacturing information data zone (40) disposed on an outermost peripheral of the biological disc (21) having a data start mark used to determine a starting point of a data mark; the data mark including a plurality of data units (41) having a predetermined length used to record data corresponding to the biological disc (21);
a plurality of flow paths (25) separately disposed on the biological disc (21) and used for storing biological samples and reagents; entrances to the plurality of flow paths (25) set on an inner peripheral of the biological disc (21) and exits of the plurality of flow paths (25) set on an outer peripheral of the biological disc (21); and
a biological detecting zone (30) having a predetermined width disposed on the outer peripheral of the biological disc (21); the biological detecting zone (30) including a testing start mark (31) having another predetermined length used to indicate a starting point of a counting of testing chambers (26) and a separately disposed plurality of testing marks (32), a lower positioning mark, and a higher positioning mark;
wherein a testing mark (32) of the plurality of testing marks (32) is used to display a testing chamber (26), a lower positioning mark (33) and an upper positioning mark (34) having a width 0.5 times the width of the testing mark (32), the lower positioning mark (33) positioned across a lower half of the testing mark (32), the upper positioning mark (34) positioned across an upper half of the testing mark (32), and the upper half of the testing mark (32) being a part of the testing mark (32) closest to the manufacturing information data zone (40).

2. The biological disc (21) of claim 1, **characterized in that** a predetermined width of the manufacturing information data zone (40) is 5 millimeters.

3. The biological disc (21) of claim 1, **characterized in that** the plurality of data units (41) are transparent and have a same predetermined length.

4. The biological disc (21) of claim 3, **characterized in that** the predetermined length of a data unit (41) is 6 millimeters.

5. The biological disc (21) of claims 1, **characterized in that** the data start mark comprises 3 non-transparent short marks (42), 1 non-transparent long mark (43), another 3 non-transparent short marks (42), and transparent dividers (44) between the non-transparent marks (42, 43).

6. The biological disc (21) of claim 5, **characterized in that** the short marks (42) have a length 0.5 times the predetermined length of the data unit (41), the long mark (43) has a length 1.5 times the predetermined length of the data unit (41), and the dividers (44) have a predetermined length 0.5 times the predetermined length of the data unit (41).

7. The biological disc (21) of claims 1, **characterized in that** the biological detecting zone surrounding the testing start mark (31), the testing mark (32), the upper positioning mark (34), and the lower positioning mark (33) is non-transparent, and **in that** the testing start mark (31), the testing mark (32), the upper positioning mark (34), and the lower positioning mark (33) are transparent.

8. The biological disc (21) of claims 1, **characterized in that** the dividers (44) of the testing start mark (31), the testing mark (32), and the lower positioning mark (33) each have a length 0.5 times the predetermined length of the testing start mark (31).

9. The biological disc (21) of claim 8, **characterized in that** the upper positioning mark (34) is disposed next to the lower positioning mark (33).

10. The biological disc (21) of claims 8, **characterized in that** the testing mark (32) is a circle having a diameter 0.5 times the predetermined length of the testing start mark (31) and that the upper positioning mark (34) and lower positioning mark (33) are each a rectangle having a length 0.25 times the predetermined length of the testing start mark (31).

11. The biological disc (21) of claim 10, **characterized in that** the testing mark (32) is disposed on the biological detecting zone (30) near an end of the manufacturing information data zone (40).

12. The biological disc (21) of claims 1, **characterized in that** the predetermined width of the biological detecting zone (30) is 10 millimeters, and the predetermined length and a predetermined width of the testing start mark (31) are 10 millimeters to form a square.

13. A method of positioning a biological disc (21), **characterized by**:
moving an optical pick-up (28) to a biological detecting zone (30) of the biological disc (21);
the optical pick-up (28) reading positioning signals of a lower positioning mark (33) and an upper positioning mark (34);
calibrating a position of the optical pick-up (28) until the positioning signals of the lower positioning mark (33) and the upper positioning mark (34) are substantially equal;
reading a testing start mark (31) to indicate a starting point of a counting of testing chambers (26); and
performing analysis according to testing signals corresponding to testing marks (32).

14. The method of claim 13, **characterized in that** moving the optical pick-up (28) to the biological detecting zone (30) comprises:
moving the optical pick up (28) to a manufacturing information data zone (40) on an outermost peripheral of the biological disc (21);
using a data start mark as a starting point;
reading data of the manufacturing information data zone (40); and
calibrating the optical pick-up (28).

15. The method of claim 14, further **characterized by**:
moving the optical pick-up (28) within an area of the manufacturing information data zone (40);
reading data from the manufacturing information data zone (40) for a number of turns of the biological disc (21); and
selecting at least one information data to decode.

16. The method of claim 13, **characterized in that** reading data from the manufacturing information data zone (40) for a number of turns of the biological disc (21) is reading data from the manufacturing information data zone (40) for a number of turns of the biological disc (21) using the optical pick-up (28).

17. The method of claims 13, **characterized in that** calibrating a position of the optical pick-up (28) until the positioning signals of the lower positioning mark (33) and the upper positioning mark (34) are substantially equal is calibrating a position of the optical pick-up (28) until a difference between the positioning signals of the lower positioning mark (33) and the upper positioning mark (34) is less than a predetermined value.

18. The method of claims 13, **characterized in that** the testing mark (32) has a reagent for labeling biological samples.
